# EUROPÄISCHE PATENTSCHRIFT

(11) **EP 2 650 851 B1**
(45) Veröffentlichungstag und Bekanntmachung des Hinweises auf die Patenterteilung: **13.03.2019**
(21) Anmeldenummer: 13153531.2
(22) Anmeldetag: 31.01.2013
(51) Int. Cl.: G06K 9/62, G06K 9/00

(54) **Gebäudeautomationsvorrichtung**
Building automation device
Dispositif d'automatisation de bâtiment

(30) Priorität: 12.04.2012 DE 102012103175
(43) Veröffentlichungstag der Anmeldung: 16.10.2013
(73) Patentinhaber: Steinel GmbH, 33442 Herzebrock (DE)
(72) Erfinder: Steinel, Ingo Heinrich, 33442 Herzebrock-Clarholz (DE)
(74) Vertreter: Müller Hoffmann & Partner

(56) Entgegenhaltungen:
- EP-A1- 0 939 386
- US-A1- 2009 033 745

## Beschreibung

Die vorliegende Erfindung betrifft eine Gebäudeautomationsvorrichtung nach dem Oberbegriff des Hauptanspruchs.

Eine derartige Vorrichtung, etwa in Form einer Beleuchtungssteuerungsvorrichtung oder einer Steuerungsvorrichtung für ein Klimaaggregat als Gebäudeaggregat, ist aus dem Stand der Technik allgemein bekannt und bezweckt, die jeweilige Funktion bzw. den Betriebszustand des betreffenden Gebäudeaggregats unter Nutzung der Sensormittel abhängig davon zu machen, ob ein Erfassungsobjekt, etwa eine von dem Betriebszustand des Gebäudeaggregats betroffene Person, sich in dem Erfassungsbereich der Sensormittel aufhält. Dies bewirkt etwa bei der Lichtautomationsvorrichtung, dass - energiesparend - die angesteuerte Leuchtenvorrichtung nur dann betrieben wird, wenn sich das Erfassungsobjekt im Erfassungsbereich tatsächlich aufhält.

Angesichts vielfältiger derartiger Automatisierungsanforderungen im Gebäudeautomationskontext besteht daher das Bedürfnis nach einen zuverlässigen Erfassungsbetrieb gewährleistenden Sensormitteln.

Aus dem Stand der Technik ist es bekannt, Sensormittel zur Bewegungserfassung in Form verschiedener Erfassungstechnologien und - prinzipien einzusetzen. So ist es etwa zur Bewegungserfassung im Bereich der Beleuchtungssteuerung bekannt und etabliert, sogenannte PIR- (Passiv-Infrarot-) Sensoren einzusetzen, welche auf der Basis detektierter Infrarotstrahlung im Erfassungsbereich (genauer: einer sich etwa durch die Bewegung des Erfassungsobjekts ändernden detektierten Infrarotstrahlung) ein Erfassungssignal ausgeben. Alternative, vergleichbare Technologien sind sogenannte Hochfrequenz- bzw. Radar-Sensortechnologien, welche auf der Basis von Änderungen reflektierter und detektierter Hochfrequenzwellen arbeiten, wiederum alternativ und zur Bewegungserfassung bekannt sind Ultraschall-basierte Sensormittel.

All diese bekannten Sensortechnologien zur Realisierung von Sensormitteln sind jedoch in ihrer Wirkungsweise zunächst Bewegungssensoren, d.h. sie reagieren primär auf eine Bewegung eines Erfassungsobjekts (also etwa einer Person), mit zugehörigen, Messprinzip-bedingten Besonderheiten: So zeichnet sich etwa die auch in der Großserie eingesetzte und bewährte PIR-Bewegungserfassungstechnologie dadurch aus, dass eine Detektorempfindlichkeit u.a. davon abhängig ist, in welcher (Bewegungs-) Richtung sich das Erfassungsobjekt relativ zum Sensor bewegt, Entsprechendes gilt für die bekannten, typischerweise auf dem Doppler-Prinzip basierenden HF- bzw. Radar-Sensoren. Bei letzteren kommt gerade bei langgestreckten Erfassungsbereichen das Problem hinzu, dass auch potentiell weit entfernte oder hinter Barrieren, wie etwa Wänden, erfolgende Bewegungen, oftmals unerwünscht, das Erfassungssignal auslösen und mithin das Gebäudeaggregat aktivieren.

Häufig gewünscht, gerade im skizzierten Gebäudekontext, ist es jedoch, unabhängig von einer Bewegungsgeschwindigkeit und/oder Bewegungsrichtung eines Erfassungsobjekts festzustellen, ob sich das Erfassungsobjekt in einem klar abgrenzbaren Erfassungsbereich der Sensormittel befindet. Traditionelle, bewegungsbasierte Sensormittel versuchen dies durch eine entsprechend empfindliche Auslegung bzw. Kalibrierung der Sensortechnologie zu realisieren, so dass die "Anwesenheitserfassung" bekannter Sensormittel dadurch realisiert wird, dass von einem menschlichen, wenig beweglichen Erfassungsobjekt gleichwohl die gelegentlichen, unvermeidlichen Bewegungen erfasst und in das Anwesenheitssignal umgesetzt werden. Diese Vorgehensweise bringt jedoch erhebliche Kalibrierungsprobleme mit sich, da etwa eine Abgrenzung zu anderen, nicht zu detektierenden Objekten (z.B. sich mit geringen Bewegungsamplituden bewegliche Vorhänge in einem Büro-Erfassungsbereich) praktisch unmöglich ist. Zusätzlich erschwerend ist hier die skizzierte Richtungsabhängigkeit einer Detektionsempfindlichkeit.

Damit besteht in Abkehr von der als empfindlicher Bewegungserfassung traditionell realisierten Anwesenheitserfassung das Bedürfnis nach einer tatsächlichen Erfassung einer Anwesenheit eines Erfassungsobjekts im Erfassungsbereich, unabhängig von der Bewegung des Objekts. Der prinzipiell mögliche Gedanke, zu diesem Zweck etwa mit ansonsten bekannten Technologien des digitalen Datenvergleichs Bilder zwischen verschiedenen Anwesenheitszuständen zu vergleichen - einerseits das Bild eines Erfassungsbereichs ohne Erfassungsobjekt, andererseits das Bild des Erfassungsbereichs mit Erfassungsobjekt - bietet sich als zunächst einfach erscheinende Lösung an, führt jedoch auch in der Praxis zu zahlreichen Problemen, insbesondere angesichts des Umstandes, dass ein für eine Gebäudeautomation relevanter Erfassungsbereich sich durch verschiedene, darin befindliche und nicht für die Anwesenheitserfassung relevante Bildkomponenten ändert, so dass ein konkretes Problem beim Bildvergleich nicht in dem technischen Abgleich bzw. der Ermittlung eines Unterschieds zwischen einem aktuell erfassten und einem Referenzbild liegt, sondern darin, welche Abbildung bzw. welche Bilddaten tatsächlich als Referenzbild herangezogen werden. Beispielhaft sei dies dadurch illustriert, dass etwa in einem Bürokontext als Erfassungsbereich bereits ein verschobener Schreibtischstuhl oder ein zusätzlich angeordneter Blumentopf eine signifikante Veränderung eines (zum Vergleich mit einem eine Person aufweisenden) aktuellen Erfassungsbildes bedeuten kann, so dass dann selbst bei Abwesenheit der Person ein Anwesenheitserfassungssignal erzeugt wird und mithin das Gebäudeaggregat nicht in der gewünschten Weise aktiviert oder deaktiviert wird.

Zum weiteren Stand der Technik ist aus der EP 0 939 386 A1 eine Gebäudeautomationsvorrichtung in Form einer Einrichtung zur Raumüberwachung bekannt, welche einen Bildsensor sowie einen Präsenz- oder Bewegungsdetektors samt Steuerungs- und Auswerteelektronik aufweist. Hier wird in einer Verarbeitungsstufe zur lokalen Signalauswertung eine kombinierte Auswertung der Signale des Bildsensors sowie des Präsenz- bzw. Bewegungsdetektors als kombinierte Signalauswertung durchgeführt.

Aufgabe der vorliegenden Erfindung ist es, eine als gattungsbildend vorausgesetzte, Sensormittel mit einer Bilderfassungseinheit aufweisende Gebäudeautomationsvorrichtung im Hinblick auf ihre Detektions- und Erfassungseigenschaften, insbesondere eine Verminderung von Fehldetektionen und eine vereinfachte Anpassbarkeit an Änderungen oder nicht-detektionsrelevanter Einflüsse im Erfassungsbereich, zu verbessern, dabei eine Vorrichtung zu schaffen, welche sich für verschiedenste gebäuderelevante Automationsvorgänge eignet, bei welchen zuverlässig die Anwesenheit eines Erfassungsobjekts, insbesondere einer Person, in einem vorbestimmten oder vorbestimmbaren Erfassungsbereich der Sensormittel festzustellen ist. Dabei soll es insbesondere nicht darauf ankommen, ob und ggf. mit welcher Bewegungsgeschwindigkeit und/oder -richtung sich das Erfassungsobjekt bewegt, für die aufgabengemäße Erfassung der Anwesenheit soll es dagegen primär darauf ankommen, ob sich das Erfassungsobjekt in dem Erfassungsbereich befindet.

Die Aufgabe wird durch die Gebäudeautomationsvorrichtung mit den Merkmalen des Hauptanspruchs gelöst; vorteilhafte Weiterbildungen der Erfindung sind in den Unteransprüchen beschrieben. Während zudem die vorliegende Erfindung, zusätzlich erläutert anhand des nachfolgenden Ausführungsbeispiels, sich primär in einer strukturell definierten Erzeugnisform als Anspruchsgattung findet, soll im Rahmen der vorliegenden Erfindung gleichwohl ein Verfahren, welches die Funktionalitäten der Erzeugniskomponenten beschreibt und insoweit den Betrieb der erfindungsgemäßen Vorrichtung wiedergibt, als gleichermaßen zur Erfindung gehörig offenbart gelten.

In erfindungsgemäß vorteilhafter Weise weisen die Sensormittel eine zum Zusammenwirken mit der Bilderfassungseinheit eingerichtete elektronische Bildauswerteeinheit auf, welche mit ersten und zweiten Vergleichsmitteln versehen ist, welche wiederum aus einem vom Erfassungsbereich durch die Bilderfassungseinheit erzeugten Bild erste bzw. zweite Wahrscheinlichkeitsdaten der Anwesenheit des Erfassungsobjekts erzeugen, welche dann erfindungsgemäß mit einem vorbestimmten Gewichtungsverhältnis durch die erfindungsgemäßen Verknüpfungs- und Schwellwertmittel in das Anwesenheitserfassungssignal umgesetzt werden; dieses führt dann erfindungsgemäß die Ansteuerung (Aktivierung bzw. Deaktivierung) des Gebäudeaggregats durch.

Im Rahmen der Erfindung und in der Art eines statischen Vergleichs führen dabei die ersten Vergleichsmittel eine Analyse von Teilbildern bzw. Bildausschnitten des vom Erfassungsbereich erzeugten Bildes mit vorbestimmten, gespeicherten Teilbilddaten durch, wobei die ersten Wahrscheinlichkeitsdaten dann erfindungsgemäß ein Maß dafür sind, wie weit dieser Vergleich (genauer: eine Abfolge von verschiedenen Einzelvergleichen bezogen auf die Teilbilder) eine Übereinstimmung mit den einer tatsächlichen Vielzahl von möglichen Anwesenheitssituationen entsprechenden gespeicherten Teilbilddaten entspricht. Mit anderen Worten, die ersten Vergleichsmittel untersuchen anhand der Mehrzahl der Teilbilder den Erfassungsbereich auf Übereinstimmung mit gespeicherten, vorliegenden Situationen als Grundlage für das Erzeugen der ersten Wahrscheinlichkeitsdaten im Hinblick darauf, wie wahrscheinlich das Erfassungsobjekt, etwa die Person, tatsächlich Teil des vom Erfassungsbereich erzeugten Bildes ist.

Dabei ist es im Rahmen bevorzugter Weiterbildungen der Erfindung besonders günstig, die zu diesem Zweck technisch miteinander zu vergleichenden Teilbilddaten als vorbestimmte datenmäßige Aggregierung von Bildpixelwerten des betreffenden Teilbildes zu erzeugen, wobei dies etwa in Form von gängigen Bildtransformations- und/oder Bildkompressionsverfahren geschehen kann, bei welchen etwa Bildpixeldaten entsprechend einem jeweiligen Verfahren aggregiert werden. So können etwa die durch die ersten Vergleichsmittel aus der Mehrzahl der Teilbilder erzeugten Teilbilddaten eine Richtungsinformation erhalten (etwa gewonnen aus einem Helligkeitsverlauf). Diese erfindungsgemäß erzeugten Teilbilddaten werden dann durch die ersten Vergleichsmittel verglichen mit den vorbestimmten, gespeicherten Teilbilddaten, wobei die vorbestimmten, gespeicherten Teilbilddaten (bevorzugt wiederum in derselben oder einer vergleichbaren Weise aggregiert) aus Teilbildern hergestellt wurden, welche für die Anwesenheit des Erfassungsobjekts im Erfassungsbereich charakteristisch sind.

In der bevorzugten Weiterbildung der Erfindung ist es dann bevorzugt, den Vergleichsbetrieb durch die ersten Vergleichsmittel für die Mehrzahl der Teilbilddaten im Vergleich zu den vorbestimmten, gespeicherten Teilbilddaten hierarchisch bzw. als Ablauf zu organisieren, so dass in der Art einer digitalen Filterkette jeweilige Teilbilddaten (und damit zugehörige Teilbilder) auf ihre datenmäßige Übereinstimmung mit den vorbestimmten, gespeicherten Teilbilddaten überprüft werden. Damit entsteht aus der Mehrzahl der Teilbilder und jeweils zugehöriger, hierarchisch organisierter Vergleichsergebnisse ein Satz der ersten Wahrscheinlichkeitsdaten mit hoher Qualität der Anwesenheitserfassung.

Im Rahmen der Erfindung werden diese ersten Wahrscheinlichkeitsdaten ergänzt durch zweite Wahrscheinlichkeitsdaten, welche mittels zweiter Vergleichsmittel der Bildauswerteeinheit erzeugt werden. Mit der erfindungsgemäßen Absicht, die sich in den ersten Wahrscheinlichkeitsdaten abbildende Anwesenheitserfassungsqualität weiter zu verbessern, bewirkt die erfindungsgemäße Funktion der zweiten Vergleichsmittel eine zusätzliche Dynamisierung des Prozesses dadurch, dass die Teilbilddaten der Teilbilder des vom Erfassungsbereich erzeugten Bildes mit Teilbilddaten verglichen werden, welche als Speicherbilddaten vom Erfassungsbereich erzeugt und, bevorzugt im Rahmen der Erfindung, kontinuierlich dynamisch angepasst bzw. verändert werden. Auf diese Weise liegen mittels der Speicherbilddaten kontinuierlich an eine tatsächliche Veränderung des Erfassungsbereichs (und damit eines Bildhintergrundes) angepasste Daten vor, welche insoweit den eingangs diskutierten, nachteiligen Einfluss von Änderungen dieses Bildhintergrundes ausgleichen können und, in der Art einer lernenden Funktionalität, das System kontinuierlich anpassen. Dabei bedeutet das Vorsehen der ersten und der zweiten Vergleichsmittel keine Hierarchie od.dgl. Abfolge in der Funktionalität; vielmehr ist es als von der Erfindung umfasst und diese bevorzugt weiterbildend anzusehen, etwa mittels der zweiten Vergleichseinheit zunächst durch den Vergleichsvorgang mit den Musterdaten in der Art einer Vorselektion potentiell relevante Teilbilder zu ermitteln, welche dann darauffolgend selektiv durch die ersten Vergleichsmittel behandelt werden. Insoweit würden dann die ersten Vergleichsmittel nicht für das Gesamtbild eingesetzt, sondern lediglich für von den zweiten Vergleichsmitteln als potentiell erfassungsrelevant festgestellte Teilbilder. Auch sehen bevorzugte Weiterbildungen der Erfindung vor, dass, insoweit analog zur Funktionalität der ersten Vergleichsmittel und von diesen verarbeitete Teilbilddaten, auch die von den zweiten Vergleichsmitteln verarbeiteten Speicherbilddaten in der erfindungsgemäß weiterbildenden Weise auf der Basis einer vorbestimmten datenmäßigen Aggregierung von Bildpixelwerten eines Teilbildes erzeugt werden, wie auch, entsprechend weiterbildend, unterschiedliche Aggregierungsmuster und/oder Hierarchiemittel gemäß der Patentansprüche 2 bis 4 analog für die zweiten Vergleichsmittel gelten.

Im Ergebnis bewirkt die vorliegende Erfindung damit im Zusammenwirken zwischen den ersten Vergleichsmitteln (insoweit zum Realisieren eines statischen Vergleichs mit vorbestimmten bzw. vorexistierenden Musterdaten) und den zweiten Vergleichsmitteln (zum Realisieren eines dynamischen, sich mit den Speicherbilddaten an aktuelle Verhältnisse im Erfassungsbereich anpassenden Vergleichs) ein hochgradig effektives, dynamisches und adaptives System, welches die Vorteile einer Bildanalyse und eines Vergleichs mit charakteristischen Mustern (bzw. zugehörigen Musterdaten) kombiniert mit einem reaktiven, dynamischen Datenkontext.

Erfindungsgemäß werden diese ersten und zweiten Wahrscheinlichkeitsdaten mithilfe der Verknüpfungs- und Schwellwertmittel in einem vorbestimmten Gewichtungsverhältnis zusammengeführt, wobei es sich im Rahmen der Erfindung als besonders vorteilhaft und bevorzugt herausgestellt hat, relativ zur dynamischen Komponente (also zur Funktionalität der zweiten Vergleichsmittel) die eher statische Komponente (also die Funktionalität der ersten Vergleichsmittel) überzugewichten und so die ersten Wahrscheinlichkeitsdaten im Gewicht der Gewichtung gegenüber den zweiten Wahrscheinlichkeitsdaten im Gewicht der Gewichtung höher zu bewerten. In der erfindungsgemäßen Weiterbildung hat es sich als bevorzugt herausgestellt, die ersten Wahrscheinlichkeitsdaten mit mindestens 60%, weiter bevorzugt mindestens 66% zu bewerten, wobei entsprechend die zweiten Wahrscheinlichkeitsdaten in der Gewichtung dann mit 40% bzw. 34% oder weniger bewertet werden.

In der vorteilhaften und bevorzugten Weiterbildung der Erfindung sind den vorteilhaft vorgesehenen Hierarchiemitteln Trainingsmittel zum Erzeugen der Hierarchiedaten in einem Einrichtungsbetrieb der Gebäudeautomationsvorrichtung zugeordnet. Diese benutzen Musterobjekte, um die für die Funktionalität der ersten Vergleichsmittel vorteilhaften Hierarchiedaten dadurch zu erzeugen, dass die Abfolge bzw. Eignung der verschiedenen aggregierten Teilbilder bzw. zugehöriger Teilbilddaten im Hinblick auf ihre Tauglichkeit festgestellt wird, das Erfassungsobjekt zu erkennen bzw. zu charakterisieren. Dabei ist es einerseits bevorzugt, die Trainingsmittel so auszugestalten, dass ein Trainingsbetrieb im Erfassungsbereich bzw. gerichtet auf den konkreten Erfassungsbereich stattfindet, es ist jedoch für die Funktionalität der Erfindung nicht zwangsläufig notwendig.

Im praktischen Betrieb sinnvoll und vorteilhaft ist es, weiterbildungsgemäß Mittel zum Einstellen und/oder Begrenzen des Erfassungsbereichs vorzusehen. Dies kann in der praktischen Realisierung etwa dadurch erfolgen, dass mithilfe von geeigneten Eingabeschnittstellen in die erfindungsgemäße Vorrichtung (etwa eine datenmäßige Ankopplung, alternativ auch Fernsteuer- oder andere Bedieneinheiten) eine Bedienperson Grenzen des Erfassungsbereichs markieren und/oder vorgeben kann, ergänzend oder alternativ können auch geeignete Datensätze erzeugt oder bereitgestellt werden.

In der praktischen Realisierung der Erzeugung der Speicherbilddaten des Bildes vom Erfassungsbereich ist es vorteilhaft und bevorzugt, dieses Bild kontinuierlich und/oder periodisch zu erzeugen und entsprechend die gespeicherten Speicherbilddaten durch aktualisierte Bilddaten zu ergänzen oder zu ersetzen. Dabei hat es sich im praktischen Betrieb als unkritisch herausgestellt, wenn diese kontinuierlich und/oder periodisch erzeugten neuen (aktualisierten) Speicherbilddaten nicht danach geprüft, gefiltert oder bewertet sind, ob darauf tatsächlich die Anwesenheit des Erfassungsobjekts vorliegt; vielmehr ist es im Rahmen einer Weiterbildung der Erfindung vorteilhaft und bevorzugt, die kontinuierlich erneuerten, aktualisierten Speicherbilddaten unabhängig von einem jeweiligen Erfassungszustand oder einer Anwesenheitserfassungssituation auf einem zugehörigen Bildschirmerfassungsbereich vorzunehmen. Dies liegt daran, dass bei kontinuierlich sich erneuernden bzw. aktualisierten Speicherbilddaten im Regelfall diejenigen Datenkomponenten überwiegen, bei welchen kein Erfassungsobjekt vorhanden ist, so dass ein durch ein vorhandenes Objekt entstehender Fehler sich in zu vernachlässigender Weise auf das Erzeugen der zweiten Wahrscheinlichkeitsdaten auswirkt.

Insbesondere im Hinblick auf eine zuverlässige Funktionalität der ersten Vergleichsmittel ist es günstig, für die Teilbilder des vom Erfassungsbereich erzeugten Bildes eine geeignete bildliche Segmentierung des Erfassungsbereichs vorzunehmen oder erzeugen zu lassen, in welche die geometrischen Verhältnisse der Bilderfassungseinheit (konkret etwa eine Kameraposition in einem zugehörigen Gebäude für das Aufnehmen des Bildes, eine Höhe bzw. eine Weite des Erfassungswinkels) Berücksichtigung finden. Zu diesem Zweck ist weiterbildungsgemäß und vorteilhaft die Segmentiereinheit vorgesehen, welche die Teilbilddaten um die die Befestigungs- und/oder Ausrichteposition der Bilderfassungseinheit berücksichtigenden Geometriedaten für ein betreffendes Teilbild ergänzt.

Im praktischen Betrieb sinnvoll und vorteilhaft ist es ferner, der Bilderfassungseinheit Mittel zur Tageszeiterfassung und/oder zur Erfassung einer Umgebungshelligkeit zuzuordnen, etwa um den Umstand bei der Funktion der ersten und der zweiten Vergleichsmittel zu berücksichtigen, dass am Tage andere Lichtverhältnisse und damit Bildverhältnisse gelten, als etwa in einem Nachtzustand (auch wenn weiterbildungsgemäß gerade in einem solchen Zustand schlechter Umgebungsbeleuchtung die weiterbildungsgemäß vorgesehenen Infrarot-Leuchtmittel für eine nutzbare Ausleuchtung des Bilderfassungsbereichs sorgen können). Konkret ist es weiterbildungsgemäß und vorteilhaft vorgesehen, abhängig von der Tageszeit und/oder einer erfassten Umgebungshelligkeit für einen Vergleichsbetrieb der ersten und/oder der zweiten Vergleichsmittel einen jeweils vorgesehenen bzw. günstigen Satz der Teilbilddaten (bzw. der Speicherbilddaten des gespeicherten Bildes) auszuwählen, um insoweit eine Erfassungsqualität weiter zu erhöhen bzw. die Gefahr von lichthelligskeitsabhängigen Auswertefehlern zu vermindern.

Während die vorliegende Erfindung sich aufgrund ihrer hohen Erkennungsqualität, ihrer Unabhängigkeit von einem konkreten Bewegungsverhalten des Erfassungsobjekts und ihrer Eignung, prinzipiell auch eine Mehrzahl von Erfassungsobjekten im Erfassungsbereich erkennen zu können (und dies etwa von einem einzelnen Erfassungsobjekt noch unterscheiden zu können) für beliebige Zwecke der Gebäudeautomationsvorrichtung eignet, sind gleichwohl die Anforderungskomplexe im Bereich der Beleuchtungssteuerung, der Klima-, Fenster- oder Lüftersteuerung sowie der Aufzugs- und Fahrstuhlsteuerung besonders geeignet, diese Vorteile zur Geltung kommen zu lassen.

So ermöglicht es etwa die vorliegende Erfindung in äußerst wirksamer Weise und unabhängig von einer Bewegung einer Person im Erfassungsbereich, eine Beleuchtung auch dann über einen längeren Zeitraum eingeschaltet zu lassen, wenn sich die im Erfassungsbereich befindliche Person nicht bewegt.

Gleichermaßen ist die vorliegende Erfindung erstmals und in Abgrenzung vom Stand der Technik in der Lage, abhängig etwa von einer Anzahl von erfassten Erfassungsobjekten und/oder einer Person eines erfassten Erfassungsobjekts (entsprechend einem Teilbild bzw. einer Lokalisierung im Rahmen des Erfassungsbereich) eine Aktivierung zugehöriger Gebäudeaggregate vorzunehmen, etwa eines dort zugeordneten Beleuchtungskörpers, ergänzend oder alternativ eine Heizungs- oder Belichtungsfunktionalität, welche diese Anzahl der Erfassungsobjekte (Personen) berücksichtigt und etwa personenabhängig eine Lüftungsdauer oder Fensteröffnungsweite bestimmt.

Wiederum exemplarisch und unabhängig davon ergibt sich die Möglichkeit, die besonders vorteilhafte und weiterbildungsgemäß beanspruchte Steuerungsfunktionalität im Rahmen der Aufzugssteuerung bzw. der Fahrstuhlkabinensteuerung zu nutzen, um in vorteilhafter Weise und abhängig von einer detektierten Person und/oder Personenanzahl vor oder in einer Aufzugskabine das Verhalten dieses Fahrstuhls zu steuern, etwa dergestalt, dass gezielt Fahrstuhlkabinen zu einem jeweiligen Stockwerk mit dort wartender/n Person(en) verbracht werden und/oder eine bereits teilweise besetzte Fahrstuhlkabine angesichts einer wartenden, das Gesamt-Aufnahmevermögen übersteigenden Personenzahl dann an einem Stockwerk, ohne zu halten, vorbeifährt.

Im Ergebnis zeigt sich, dass mit der vorliegenden Erfindung das Potential für eine Vielzahl neuer und die Möglichkeiten der Gebäudeautomatisierung signifikant erweiternder Funktionalitäten geschaffen werden kann, dergestalt, dass mit der erfindungsgemäßen Anwesenheitserfassung ein zuverlässiger Weg geschaffen wird, die Anwesenheit einer bzw. mehrerer Personen als Erfassungsobjekte, weiterbildungsgemäß gar deren Lokalisierung und/oder Quantifizierung im Erfassungsbereich, zuverlässig vorzunehmen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: ein schematisches Blockschaltbild mit wesentlichen Funktionskomponenten, der erfindungsgemäßen Gebäudeautomationsvorrichtung gemäß einem ersten bevorzugten Ausführungsbeispiel;
- Fig. 2: eine schematische Illustration eines Erfassungsbereichs mit Erfassungsobjekt und deckenseitig montierter Gebäudeautomationsvorrichtung zum Illustrieren eines Einsatzkontext des Ausführungsbeispiels der Fig. 1 im Rahmen einer Beleuchtungssteuerung;
- Fig. 3: eine Schemadarstellung eines in Teilbilder segmentierten, vom Erfassungsbereich der Fig. 1, Fig. 2 erzeugten Bildes und
- Fig. 4: eine Schemadarstellung zum Verdeutlichen einer von den ersten Vergleichsmitteln im Ausführungsbeispiel der Fig. 1 durchgeführten datenmäßigen Aggregierung von Bildpixelwerten eines das Erfassungsobjekt aufweisenden Teilbildes in Fig. 3.

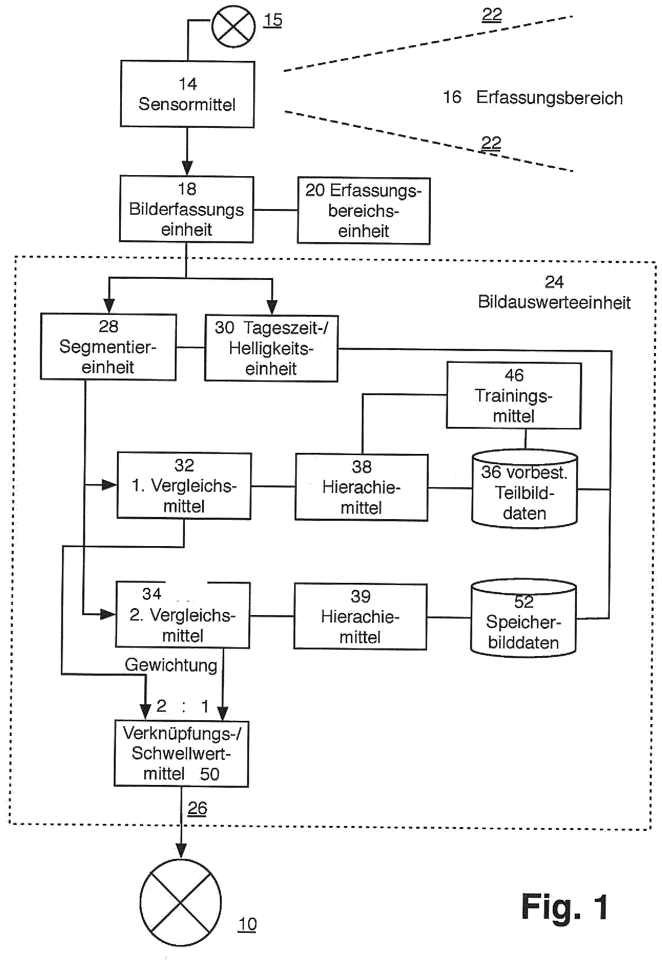

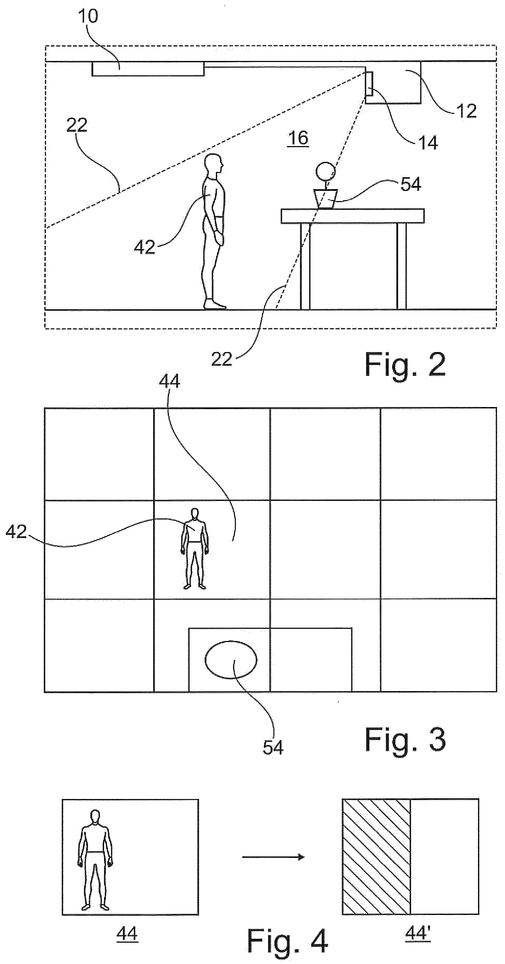

Die Figuren 1 und 2 zum bevorzugten Ausführungsbeispiel der Erfindung zeigen die Gebäudeautomationsvorrichtung in einer Realisierung als Beleuchtungssteuerungsvorrichtung, wobei als Gebäudeaggregat eine schematische Beleuchtungsvorrichtung 10 in dem in Fig. 2 schematisch gezeigten Bürokontext gelten soll. Die Gebäudeautomationsvorrichtung des gezeigten Ausführungsbeispiels weist dabei in einem Gehäuse 12 aufgenommene Sensormittel 14 sowie eine Infrarotbeleuchtung 15 auf, welche auf einen Erfassungsbereich 16 gerichtete Kameramittel und in ansonsten bekannter Weise eine zum elektronischen Erfassen, Zwischenspeichern und Bereitstellen für eine nachfolgende Bildauswertung eingerichtete Bilderfassungseinheit 18 aufweisen. In bevorzugter Weise ist dieser Bilderfassungseinheit eine Einheit 20 zum Einrichten, Bemessen, Begrenzen und/oder Ändern des Erfassungsbereichs 16 zugeordnet, bevorzugt dadurch realisiert, dass in Form einer manuell betätigbaren Schnittstelle oder drahtlos geeignet angebundener Bedieneinheit eine Bedienperson den Erfassungsbereich 16, etwa durch das Festlegen von Begrenzungen (Bezugszeichen 22 in Fig. 2) einstellen und/oder beeinflussen kann. Im Ausführungsbeispiel geschieht dies rechnerisch bzw. durch geeignete symbolische Begrenzung des von der Kameraeinheit der Sensormittel 14 erfassbaren Bereichs.

Als zentrale und funktionskritische Einheit zur Realisierung der Erfindung ist der Bilderfassungseinheit 18 eine Bildauswerteeinheit 24 nachgeschaltet, welche in nachfolgend zu beschreibender Weise zweistufig eine inhaltliche Auswertung des von der Bilderfassungseinheit zwischengespeicherten bzw. zur Bildanalyse bereitgehaltenen aktuellen Bildes des Erfassungsbereichs analysiert und aus dieser Analyse dann ein Anwesenheitserfassungsignal (Pfad 26) für die Beleuchtungseinheit als Gebäudeaggregat 10 zu dessen gesteuerter Aktivierung bzw. Deaktivierung bzw. Betriebsmodusänderung (etwa Dimmung) ausgibt.

Konkret weist dabei die Bildauswerteeinheit 24 eine Bildsegmentiereinheit 28 auf, welche etwa in der in Fig. 3 gezeigten Art aus dem vom (geeignet begrenzten bzw. eingestellten) Erfassungsbereich 16 erzeugten Bild eine Mehrzahl von Teilbildern erzeugt; die in Fig. 3 gezeigte gerasterte Teilbildanordnung ist dabei lediglich vereinfachend und exemplarisch; insbesondere ist es auch von der Erfindung umfasst, diese Teilbilder einander überlappend, mit verschiedenen Größen oder auf andere Weise auszugestalten. Bevorzugt im Rahmen der Erfindung sind zudem die jeweiligen Teilbilder datenmäßig mit Geometriedaten verknüpft, welche die (in Fig. 2 erkennbare) Position des Gehäuses 12 mit der Gebäudeautomationsvorrichtung in einen geometrischen Bezug zum Erfassungsbereich setzen und so etwa die Abstände, die Betrachtungswinkel und die damit zusammenhängenden Projektionswinkel berücksichtigen.

Ferner weist die Bildauswerteeinheit eine Tageszeit- und/oder Helligkeitseinheit 30 auf, welche, bevorzugt auf der Basis des erfassten Bildes, alternativ oder ergänzend auch unabhängig davon mit Hilfe etwa eines Helligkeitssensors oder eines Urzeitmoduls, einen aktuellen Umgebungshelligkeitsstand feststellt und zugehörige Tageszeit- bzw. Umgebungshelligkeitsdaten als zusätzliche Informationen in die weitere Bildverarbeitung und Auswertung einfließen lässt.

Die durch die Einheit 28 segmentierten und bevorzugt mit Geometrie- sowie Umgebungshelligkeitsparametern versehenen Teilbilddaten werden dann sowohl ersten Vergleichsmitteln 32, als auch zweiten Vergleichsmitteln 34 zur weiteren Verarbeitung angelegt.

Die ersten Vergleichsmittel 32, in der Art eines hierarchischen Systems, vergleichen dabei die vom aktuellen Erfassungsbereich erhaltenen Teilbilddaten mit vorbestimmten Teilbilddaten aus einer Speichereinheit 36, wobei diese vorbestimmten Teilbilddaten (weiter bevorzugt tageszeitabhängig ausgewählt, d.h. jeweils vorliegend für eine Mehrzahl möglicher Umgebungslichtszenarien) durch die ersten Vergleichsmittel 32 mit Hilfe von Hierarchiemitteln 38 im Wege des aggregierten Bildvergleichs so verarbeitet werden, dass daraus, und damit als Ausgangssignal 40 der ersten Vergleichsmittel (erste Wahrscheinlichkeitsdaten für die Anwesenheit eines Erfassungsobjekts Person 42 in Fig. 2) vorliegen. Konkret enthält die Speichereinheit 36 eine Mehrzahl vorbestimmter Teilbilddaten in einer aggregierten Form, wie es in Fig. 4 (bezugnehmend insoweit auf ein Teilbild 44 in Fig. 3) illustriert ist. Am Beispiel des im Erfassungsbereich befindlichen Objekts 42 verdeutlicht die Fig. 3 als schematische Darstellung des segmentierten Bildes vom Erfassungsbereich, dass im Teilbild 44 das Objekt vorhanden ist, verzerrt durch die Deckenperspektive der Fig. 2. Geeignet transformiert (Fig. 4) zeigt sich, dass eine vertikale hell-dunkel-Darstellung (Repräsentation), geeignet datenmäßig funktional aus dem Teilbild 44 erzeugt, eine gute und einen zuverlässigen Erkennungsbetrieb gewährleistende datenmäßige Aggregierung darstellt. Entsprechend ist die Darstellung 44' in Fig. 4 eine von mehreren vorhandenen Varianten der vorbestimmten Teilbilddaten, welche im Datenspeicher 36 gespeichert und durch die Hierarchiemittel 38, abhängig von ihrer Tauglichkeit, das Objekt 42 im gezeigten Bereich zuverlässig als anwesend zu charakterisieren, hierarchisiert abgelegt sind. Die Hierarchiemittel wiederum wurden durch Trainingsmittel 46 in einem (typischerweise vorgelagerten) im Erfassungsbereich 16 durchgeführten Trainingsmodus eingerichtet, können alternativ aber auch losgelöst von diesem Erfassungsbereich und lediglich zum Erzeugen abstrakter Wiedergabeformen der Art der Darstellung 44' eingerichtet werden.

Die ersten Vergleichmittel 32 stellen nunmehr datenmäßig aggregierte (d.h. in der Art des Übergangs zwischen 44 und 44' datenmäßig modifizierte) Datensätze der Teilbilder des Vergleichs einander gegenüber, wobei dies für jedes Teilbild hierarchisch mit einer Mehrzahl der gespeicherten Teilbilddaten der Speichereinheit 36 erfolgt; die Hierarchiemittel 38 geben dabei eine vorbestimmte Tauglichkeit bzw. Brauchbarkeit dieser aggregierten vorbestimmten Teilbilddaten und deren Reihenfolge wieder.

Im gezeigten Ausführungsbeispiel würde daher die Aggregierung (datenmäßige Aufbereitung) des Teilbildes im Feld 44 zu einer sehr weitgehenden Übereinstimmung mit dem vorbestimmten aggregierten Teilbild führen, so dass als Ausgangssignal der ersten Vergleichsmittel entlang der Leitung 40 einen hohen Wahrscheinlichkeitswert repräsentierende erste Wahrscheinlichkeitsdaten an nachgeschalteten Verknüpfungs- und Schwellwertmittel 50 anliegen.

Zusätzlich zu diesem ersten, im Wesentlichen nach erfolgtem Trainingsbetrieb auf statischen und weitgehend invarianten vorbestimmten Teilbilddaten und deren Hierarchie beruhenden Vergleichszweig erfolgt eine Analyse der aus der Segmentiereinheit 28 anliegenden Teilbilddaten mittels der zweiten Vergleichsmittel 34. Diese greifen zum Vergleich auf gespeicherte Bilddaten einer Speichereinheit 52 zu (über analog zu den den ersten Vergleichsmitteln 32 zugeordneten Hierarchiemitteln 38 oder mit reduzierter Anzahl von Klassifikatoren arbeitende Hierarchiemittel 39), wodurch den zweiten Vergleichsmitteln Bilddaten und/oder Teilbilddaten des Erfassungsbereichs zu einem früheren Zeitpunkt zur Verfügung gestellt werden. Im Rahmen des gezeigten vorteilhaften Ausführungsbeispiels werden dabei die Speicherbilddaten in der Speichereinheit 52 periodisch aktualisiert bzw. an etwaige Entwicklungen anpasst. Auf diese Weise ermöglicht es dann beispielsweise die Funktionalität der zweiten Vergleichsmittel, welche ein aktuelles Teilbild mit entsprechenden Bildinformationen der Speicherbilddateneinheit 52 vergleicht (gegebenenfalls auch zusätzlich unter Einschaltung von analog zur Einheit 38 ausgebildeten Hierarchiemitteln), dass potenziell den Anwesenheitserfassungsbetrieb störende Artefakte, wie das schematisch gezeigte Blumenobjekt 54 in Fig. 2, welches im Bürobetrieb typischerweise häufig verändert wird und so eine reine statische Analyse verschlechtern würde, im Wege einer periodischen Aktualisierung der Speicherbilddaten zunehmend als Teil des Bildhintergrundes erfasst wird und somit sich nicht fehlerbildend auf den Anwesenheitserfassungsbetrieb auswirkt. Dabei hat es sich im Rahmen bevorzugter Weiterbildungen als besonders vorteilhaft herausgestellt, die Speicherbilddaten der Speichereinheit 52 periodisch durch aus dem Erfassungsbereich gewonnene Bilddaten zu ersetzen, ungeachtet des Umstandes, ob sich tatsächlich das Erfassungsobjekt 42 in diesem Bereich 16 aufhält. Im praktischen Betrieb hat sich herausgestellt, dass ein dadurch theoretisch möglicher Fehler keine signifikanten Auswirkungen auf eine Anwesenheitserfassungsgüte aufweist. Auch ist es weiterbildungsgemäß bevorzugt, die Speicherbilddaten als Negativdaten zu berücksichtigen, d.h. als repräsentativ für einen vom Erfassungsobjekt freien Erfassungsbereich.
Wie die Fig. 1 verdeutlicht, erzeugen auch die zweiten Vergleichsmittel ein Wahrscheinlichkeitsdatensignal, entsprechend einem datenmäßigen Vergleichsergebnis. Die Verknüpfungs- und Schwellwertmittel 50 bestimmen aus den ersten Wahrscheinlichkeitsdaten (Leitung von 32) bzw. den zweiten Wahrscheinlichkeitsdaten (Leitung von 34) das Anwesenheitserfassungssignal (Steuerleitung 26) wobei im vorliegenden Ausführungsbeispiel es sich als besonders günstig herausgestellt hat, die ersten und die zweiten Wahrscheinlichkeitsdaten nicht paritätisch zu gewichten, sondern die ersten Wahrscheinlichkeitsdaten (hier im Verhältnis 2:1) relativ zu den zweiten Wahrscheinlichkeitsdaten überzugewichten. Auch hier ist zu beachten, dass in einer praktischen Realisierung der Erfindung typischerweise in einer Abfolge der Verarbeitung zunächst die zweiten Vergleichsmittel in der Art einer oben erläuterten Vorauswahl bzw. Vorselektion für lediglich ausgewählte der Teilbilder, die dann von den zweiten Vergleichsmitteln zu verarbeiten sind, wirken können.

Als Ergebnis lässt sich somit dann durch das Ausführungsbeispiel eine hochgradig zuverlässige Erfassung einer Anwesenheit des Objekts 42 im Erfassungsbereich 16 sicherstellen, wobei nicht nur eine zuverlässige Unterscheidung von nicht relevanten Objekten (wie etwa dem in Fig. 2 gezeigten Tisch durch die Funktionalität der ersten Vergleichsmittel möglich ist), zusätzlich wird die erfindungsgemäße Anwesenheitserfassung geeignet dynamisiert, insbesondere durch Funktionalität der zweiten Vergleichsmittel im Zusammenwirken mit den Speicherbilddaten der Einheit 52, wobei insbesondere auch prinzipiell bewegliche und ortsveränderliche Objekte (Blumentopf 54) als zum Hintergrund gehörig erkannt werden und so das System sich adaptiv auf veränderliche Umstände im Erfassungsbereich 16 einstellt.

Die vorliegende Erfindung ist nicht auf das gezeigte Ausführungsbeispiel beschränkt. Vielmehr eignet sich die Erfindung, über das beschriebene Beispiel der Beleuchtungssteuerung hinaus, für praktisch alle Zwecke der Steuerung und/oder Betriebsmodusänderung von Gebäudeaggregaten. Auch ist es erfindungsgemäß und weiterbildungsgemäß vorgesehen, die Funktionalität der Bildauswerteeinheit um weitere Komponenten zu ergänzen, welche die Analyse- und Strukturvorteile der vorliegenden Erfindung vorteilhaft nutzen, um etwa (entsprechend einem jeweiligen Bildsegment, vgl. Fig. 3) Lokalisierungsinformationen zusätzlich zu einer Anwesenheitsinformation des Objektes zu erzeugen, wie auch etwa auf der Basis entsprechender Volumen- und Ortsinformationen Daten über eine Mehrzahl von Erfassungsobjekten und/oder deren Lokalisierung im Erfassungsbereich zu erzeugen.

## Patentansprüche

1. Gebäudeautomationsvorrichtung mit eine Bilderfassungseinheit (18) aufweisenden Sensormitteln (14), die zum Erfassen einer Anwesenheit eines Erfassungsobjektes (42), insbesondere einer Person, in einem Erfassungsbereich (16) der Sensormittel ausgebildet sind,
und einem als Reaktion auf ein Anwesenheitserfassungssignal (26) der Sensormittel aktivierbaren und/oder in einem Betriebsmodus veränderbaren Gebäudeaggregat (10),
**dadurch gekennzeichnet,**
**dass** die Sensormittel eine zum Zusammenwirken mit der Bilderfassungseinheit eingerichtete elektronische Bildauswerteeinheit (24) aufweisen,
die so ausgebildet ist, dass zum Erfassen der Anwesenheit des Erfassungsobjektes (42)
erste Wahrscheinlichkeitsdaten der Anwesenheit durch erste Vergleichsmittel (32) der Bildauswerteeinheit erzeugt werden können, die Teilbilddaten einer Mehrzahl von Teilbildern (44) eines vom Erfassungsbereich erzeugten Bildes mit vorbestimmten, gespeicherten Teilbilddaten (36, 44') als vorbestimmten oder vorexistierenden Musterdaten vergleichen, wobei die ersten Vergleichsmittel untersuchen anhand der Mehrzahl der Teilbilder den Erfassungsbereich auf Übereinstimmung mit gespeicherten vorliegenden Situationen als Grundlage für das Erzeugen der ersten Wahrscheinlichkeitsdaten im Hinblick darauf, wie wahrscheinlich das Erfassungsobjekt tatsächlich Teil des vom Erfassungsbereich erzeugten Bildes ist,
und zweite Wahrscheinlichkeitsdaten der Anwesenheit durch zweite Vergleichsmittel (34) der Bildauswerteeinheit erzeugt werden können, die Teilbilddaten einer Mehrzahl von Teilbildern des vom Erfassungsbereich erzeugten Bildes mit Teilbilddaten eines zu einem früheren Zeitpunkt erzeugten und als Speicherbilddaten (52) gespeicherten Bildes vom Erfassungsbereich vergleichen, wobei die zweiten Vergleichsmittel zum Realisieren eines dynamischen, sich mit den Speicherbilddaten an aktuelle Verhältnisse im Erfassungsbereich anpassenden Vergleichs, eingesetzt wird,
und den ersten und den zweiten Vergleichsmitteln Verknüpfungs- und Schwellwertmittel (50) der Bildauswerteeinheit so zugeordnet sind, dass für ein vom Erfassungsbereich erzeugtes Bild und als Reaktion auf oberhalb eines Anwesenheitserkennungsschwellwerts liegende zweite Wahrscheinlichkeitsdaten der zweiten Vergleichsmittel die ersten Wahrscheinlichkeitsdaten durch die ersten Vergleichsmittel erzeugt werden und aus einer mit einem vorbestimmten Gewichtungsverhältnis durchgeführten Gewichtung der ersten und der zweiten Wahrscheinlichkeitsdaten die Verknüpfungs- und Schwellwertmittel das Anwesenheitserfassungssignal (26) daraus erzeugen.

2. Gebäudeautomationsvorrichtung nach Anspruch 1,
**dadurch gekennzeichnet,**
**dass** die ersten Vergleichsmittel (32) so ausgebildet sind, dass die Teilbilddaten auf der Basis einer vorbestimmten datenmäßigen Aggregierung von Bildpixelwerten eines betreffenden Teilbildes (44), insbesondere einer Richtung eines Helligkeitsverlaufs und/oder eines Histogramms, erzeugt werden.

3. Gebäudeautomationsvorrichtung nach Anspruch 2,
**dadurch gekennzeichnet,**
**dass** die ersten Vergleichsmittel (32) so ausgebildet sind, dass die vorbestimmte datenmäßige Aggregierung eine Mehrzahl von unterschiedlichen Aggregierungsmustern für das selbe Teilbild, für ein überlappendes und/oder benachbartes Teilbild aufweist und die Mehrzahl von Aggregierungsmustern in eine zugehörige Mehrzahl von Teilbilddaten umgesetzt wird.

4. Gebäudeautomationsvorrichtung nach Anspruch 3,
**dadurch gekennzeichnet,**
**dass** den ersten Vergleichsmitteln (32) Hierarchiemittel (38) zugeordnet sind, die auf der Basis von gespeicherten vorbestimmten Hierarchiedaten eine Abfolge der Aggregierungsmuster sowie deren datenmäßiger Verarbeitung durch die ersten Vergleichsmittel, insbesondere in der Art einer digitalen Filterkette, vorgeben.

5. Gebäudeautomationsvorrichtung nach Anspruch 4,
**dadurch gekennzeichnet,**
**dass** den Hierarchiemitteln Trainingsmittel (46) zum Erzeugen der Hierachiedaten in einem Einrichtungsbetrieb der Gebäudeautomationsvorrichtung, insbesondere mit Musterobjekten, zugeordnet sind.

6. Gebäudeautomationsvorrichtung nach einem der Ansprüche 1 bis 5, **gekennzeichnet durch** Mittel zum Einstellen und/oder Begrenzen des Erfassungsbereichs, insbesondere durch manuelle Betätigung einer Schnittstelleneinheit und/oder durch vorbestimmbare Erfassungsbereichsdaten.

7. Gebäudeautomationsvorrichtung nach einem der Ansprüche 1 bis 6, **dadurch gekennzeichnet,**
**dass** die Bildeauswerteeinheit so ausgebildet ist, dass die Speicherbilddaten (52) bevorzugt kontinuierlich und/oder in regelmäßigen Abständen durch jeweils aktuelle Bilddaten des Erfassungsbereichs ersetzt oder ergänzt werden.

8. Gebäudeautomationsvorrichtung nach einem der Ansprüche 1 bis 7, **dadurch gekennzeichnet,**
**dass** die Bildeauswerteeinheit so ausgebildet ist, dass die Speicherbilddaten als Bilddaten unabhängig von der Anwesenheit des Erfassungsobjekts im Erfassungsbereich erfasst und verarbeitet werden.

9. Gebäudeautomationsvorrichtung nach einem der Ansprüche 1 bis 8, **dadurch gekennzeichnet,**
**dass** der Bildauswerteeinheit eine Segmentiereinheit (28) für eine Mehrzahl von Teilbildern des Erfassungsbereichs zugeordnet ist, die insbesondere die Teilbilddaten um eine Befestigungs- und/oder Ausrichteposition der Bilderfassungseinheit berücksichtigenden Geometriedaten eines betreffenden Teilbildes ergänzt.

10. Gebäudeautomationsvorrichtung nach einem der Ansprüche 1 bis 9, **dadurch gekennzeichnet,**
**dass** die Bildauswerteeinheit Objektvolumen- und/oder Objektzahlerfassungsmittel und/oder Objektlokalisierungsmittel aufweist, die auf der Basis der ersten und der zweiten Wahrscheinlichkeitsdaten sowie von Zuordnungsdaten aus einer Segmentiereinheit für eine Mehrzahl von Teilbildern des Erfassungsbereichs zusätzlich zum Anwesenheitserfassungssignal oder unabhängig von diesem Objektvolumendaten, Objektzahldaten und/oder Objektlokalisierungsdaten betreffend das Erfassungsobjekt im Erfassungsbereich, insbesondere eine Personenanzahl und/oder ein Personenort im Erfassungsbereich, erzeugt.

11. Gebäudeautomationsvorrichtung nach einem der Ansprüche 1 bis 10, **dadurch gekennzeichnet,**
**dass** der Bilderfassungseinheit Mittel (30) zur Tageszeiterfassung und/oder Umgebungshelligkeitserfassung so zugeordnet sind, dass die vorbestimmten gespeicherten Teilbilddaten für die ersten Vergleichsmittel und/oder die Speicherbilddaten des zu dem früheren Zeitpunkt erzeugten und gespeicherten Bildes vom Erfassungsbereich für die zweiten Vergleichsmittel von einem der erfassten Tageszeit bzw. der erfassten Umgebungshelligkeit entsprechenden Beleuchtungszustand abhängig sind.

12. Gebäudeautomationsvorrichtung nach einem der Ansprüche 1 bis 11, **dadurch gekennzeichnet,**
**dass** die Bilderfassungseinheit für ein Infrarotspektrum empfindlich ausgebildet ist und einem Gehäuse (12) der Gebäudeautomationsvorrichtung eine auf den Erfassungsbereich gerichtete Infrarot-Beleuchtungsquelle (15) zugeordnet ist.

13. Gebäudeautomationsvorrichtung nach einem der Ansprüche 1 bis 12, **dadurch gekennzeichnet,**
**dass** die Gebäudeautomationsvorrichtung zur Beleuchtungssteuerung mit einer Leuchte (10) als Gebäudeaggregat ausgebildet ist.

14. Gebäudeautomationsvorrichtung nach einem der Ansprüche 1 bis 13, **dadurch gekennzeichnet,**
**dass** die Gebäudeautomationsvorrichtung zur Klima- und/oder Fenstersteuerung mit einem bewegbaren Vorhang, Fenster- und/oder Türflügel, Klimaaggregat, Heizaggregat und/oder Lüfter als Gebäudeaggregat ausgebildet ist.

15. Gebäudeautomationsvorrichtung nach einem der Ansprüche 1 bis 14, **dadurch gekennzeichnet,**
**dass** die Gebäudeautomationsvorrichtung zur Aufzugssteuerung mit einer Fahrstuhlkabinensteuerung, einer Fahrstuhltürsteuerung und/oder einer Aufzugnotabschaltung als Gebäudeaggregat ausgebildet ist.

## Claims

1. A building automation device comprising sensor means (14) having an image capture unit (18) and realized for detecting a presence of an object of detection (42), in particular a person, in a detection area (16) of the sensor means,
and a unit intended for a building (10) which can be activated and/or changed in an operating mode as a reaction to a presence detection signal (26) of the sensor means,
**characterized in that**
the sensor means comprise an electronical image evaluation unit (24) which is configured to interact with the image capture unit
and which is realized in such a manner that in order to detect the presence of an object of detection (42),
first data of probability of the presence can be generated by first comparison means (32) of the image evaluation unit, said first comparison means comparing partial-image data of a plurality of partial images (44) of an image generated of the detection area with predetermined stored partial-image data (36, 44') as predetermined or pre-existing model data, said first comparison means analyzing the detection area, based on the plurality of the partial images, for a match with the stored present situations as a basis for the generation of the first data of probability with regard to the probability that the object of detection is part of the image generated of the detection area, and second data of probability of the presence can be generated by second comparison means (34) of the image evaluation unit, said second comparison means comparing partial-image data of a plurality of partial images of the image generated of the detection area with partial-image data of an image of the detection area which has been generated earlier and which is stored as stored-image data (52), wherein the second comparison means are used to realize a dynamic comparison which adapts to current conditions in the detection area with the stored-image data,
and linking and threshold means (50) of the image evaluation unit are assigned to the first and second comparison means in such a manner that for an image generated of the detection area and as a reaction to second data of probability of the second comparison means being above a presence detection threshold, the first data of probability are generated by the first comparison means and the linking and threshold means generate the presence detection signal (26) therefrom by weighting the first and second data of probability using a predetermined weighting ratio.

2. The building automation device according to claim 1,
**characterized in that**
the first comparison means (32) are configured in such a manner that the partial-image data are generated based on a predetermined data-related aggregation of image pixel values of a respective partial image (44), in particular a direction of a brightness gradient and/or a histogram.

3. The building automation device according claim 2,
**characterized in that**
the first comparison means (32) are configured in such a manner that the predetermined data-related aggregation comprises a plurality of different aggregation patterns for the same partial image, for an overlapping partial image and/or for a neighboring partial image and the plurality of aggregation patterns is converted to an associated plurality of partial image data.

4. The building automation device according to claim 3,
**characterized in that**
hierarchy means (38) which determine a sequence of aggregation patterns as well as their data-related processing by the first comparison means, in particular in the manner of a digital filter chain, based on stored predetermined hierarchy data are assigned to the first comparison means (32).

5. The building automation device according to claim 4,
**characterized in that**
training means (46) for generating the hierarchy data in a setup mode of the building automation device, in particular using sample objects, are assigned to the hierarchy means.

6. The building automation device according to any one of claims 1 to 5,
**characterized by** means for adjusting and/or limiting the detection area, in particular by manual actuation of an interface unit and/or by predeterminable detection area data.

7. The building automation device according to any one of claims 1 to 6,
**characterized in that**
the image evaluation unit is configured in such a manner that the stored-image data (52) are replaced or supplemented, preferably in a continuous manner and/or at regular intervals, by up-to-date image data of the detection area.

8. The building automation device according to any one of claims 1 to 7,
**characterized in that**
the image evaluation unit is configured in such a manner that the stored-image data are captured and processed as image data independently of the presence of the object of detection in the detection area.

9. The building automation device according to any one of claims 1 to 8,
**characterized in that**
a segmentation unit (28) for a plurality of partial images of the detection area is assigned to the image evaluation unit, said segmentation unit (28) in particular supplementing the partial-image data by geometry data of a respective partial image, said geometry data taking into account an attachment and/or adjustment position of the image capture unit.

10. The building automation device according to one of claims 1 to 9, **characterized in that**
the image evaluation unit comprises object volume and/or object number detection means and/or object localization means, which generates object volume data, object number data and/or object localization data regarding the object of detection in the detection area, in particular a number of persons and/or a location of persons in the detection area based on the first and second data of probability as well as on assignment data from a segmentation unit for a plurality of partial images of the detection area in addition to the presence detection signal or independently thereof.

11. The building automation device according to any one of claims 1 to 10,
**characterized in that**
means (30) for detecting the time of day and/or ambient brightness are assigned to the image capture unit in such a manner that the predetermined stored partial-image data for the first comparison means and/or the stored-image data of the image of the detection area which has been generated earlier and stored for the second comparison means depend on a state of illumination corresponding to the detected time of day or the detected ambient brightness.

12. The building automation device according to any one of claims 1 to 11,
**characterized in that**
the image capture unit is configured to be sensitive for an infrared spectrum and an infrared illumination source (15) focused on the detection area is assigned to a housing (12) of the building automation device.

13. The building automation device according to any one of claims 1 to 12,
**characterized in that**
the building automation device is configured for illumination control with a lamp (10) as unit intended for a building.

14. The building automation device according to any one of claims 1 to 13,
**characterized in that**
the building automation device is configured to control air conditioning and/or windows with a movable curtain, a casement window and/or a door wing, an air conditioning unit, a heating unit and/or a ventilator as unit intended for a building.

15. The building automation device according to any one of claims 1 to 14,
**characterized in that**
the building automation device is configured to control an elevator with an elevator cabin controller, an elevator door controller and/or an elevator emergency shutdown system as unit intended for a building.

## Revendications

1. Dispositif d'automatisation de bâtiment qui comprend des moyens de capteur (14) ayant une unité de captage d'image (18) et réalisés pour détecter la présence d'un objet de détection (42), en particulier une personne, dans une zone de détection (16) des moyens de capteur,
et une unité (10) prévue pour le bâtiment pouvant être activé comme réaction à un signal de détection de présence (26) des moyens de capteur et/ou changé dans un mode de fonctionnement,
**caractérisé en ce que**
les moyens de capteur comprennent une unité d'évaluation d'image (24) électronique qui est configurée pour interagir avec l'unité de captage d'image,
l'unité d'évaluation d'image (24) étant réalisée de telle manière que pour détecter la présence de l'objet de détection (42),
des premières données de probabilité de la présence peuvent être générées par des premiers moyens de comparaison (32) de l'unité d'évaluation d'image, lesdits premiers moyens de comparaison comparant des données d'image partielle d'une pluralité d'images partielles (44) d'une image générée de la zone de détection avec des données d'image partielle (36, 44') prédéterminées et stockées comme des données de modèle prédéterminées et préexistantes, lesdits premiers moyens de comparaison analysant la zone de détection à l'aide de la pluralité d'images partielles par rapport à la concordance avec des situations présentes stockées comme base pour la génération des premières données de probabilité en vue de la probabilité avec laquelle l'objet de détection fait vraiment partie de l'image générée par la zone de détection,
et des deuxièmes données de probabilité de la présence peuvent être générées par des deuxièmes moyens de comparaison (34) de l'unité d'évaluation de l'image, lesdits deuxièmes moyens de comparaison comparant des données d'image partielle d'une pluralité d'images partielles de l'image générée de la zone de détection avec des données d'image partielle d'une image générée de la zone de détection à un moment antérieur et stockée comme données d'image stockée (52), lesdits deuxièmes moyens de comparaison étant utilisés pour réaliser une comparaison dynamique qui s'adapte à des conditions actuelles dans la zone de détection avec les données d'image stockée, et des moyens de lien et de valeur de seuil (50) de l'unité d'évaluation d'image sont associés aux premiers et aux deuxièmes moyens de comparaison de telle manière que pour une image générée de la zone de détection et comme réaction à des deuxièmes données de probabilité des deuxièmes moyens de comparaison qui se trouvent au-dessus d'une valeur de seuil de détection de présence, les premières données de probabilité sont générées par les premiers moyens de comparaison et les moyens de lien et de valeur de seuil génèrent le signal de détection de présence (26) par une pondération des premières et des deuxièmes données de probabilité effectuée en utilisant un coefficient de pondération prédéterminé.

2. Dispositif d'automatisation de bâtiment selon la revendication 1, **caractérisé en ce que**
les premiers moyens de comparaison (32) sont réalisés de telle manière que les données d'image partielle sont générées sur la base d'une agrégation liée aux données et prédéterminée des valeurs de pixels d'image d'une image partielle (44) en question, en particulier d'une direction d'un dégradé de luminosité et/ou d'un histogramme.

3. Dispositif d'automatisation de bâtiment selon la revendication 2, **caractérisé en ce que**
les premiers moyens de comparaison (32) sont réalisés de telle manière que l'agrégation prédéterminée liée aux données comprend une pluralité de motifs différents d'agrégation pour la même image partielle, pour une image partielle chevauchante et/ou pour une image partielle adjacente et la pluralité de motifs d'agrégation est convertie en une pluralité associée de données d'image partielle.

4. Dispositif d'automatisation de bâtiment selon la revendication 3, **caractérisé en ce que**
des moyens d'hiérarchie (38) sont associés aux premiers moyens de comparaison (32), lesdits moyens d'hiérarchie (38) prédéfinissant, sur la base des données d'hiérarchie prédéterminées stockées, une suite des motifs d'agrégation de même que leur traitement lié aux données par les premiers moyens de comparaison, en particulier dans la manière d'une chaîne de filtre numérique.

5. Dispositif d'automatisation de bâtiment selon la revendication 4, **caractérisé en ce que**
des moyens d'entraînement (46) pour générer les données d'hiérarchie dans un mode de configuration du dispositif d'automatisation de bâtiment, en particulier avec des objets de modèle, sont associés aux moyens d'hiérarchie.

6. Dispositif d'automatisation de bâtiment selon l'une quelconque des revendications 1 à 5,
**caractérisé par** des moyens pour ajuster et/ou limiter la zone de détection, en particulier par actionnement manuel d'une unité d'interface et/ou par des données de zone de détection prédéterminables.

7. Dispositif d'automatisation de bâtiment selon l'une quelconque des revendications 1 à 6,
**caractérisé en ce que**
l'unité d'évaluation d'image est réalisée de telle manière que les données d'image stockée (52) sont remplacées ou complétées, de préférence de manière continue et/ou à des intervalles réguliers, par des données d'image actuelles de la zone de détection.

8. Dispositif d'automatisation de bâtiment selon l'une quelconque des revendications 1 à 7,
**caractérisé en ce que**
l'unité d'évaluation d'image est réalisée de telle manière que les données d'image stockée sont capturées et traitées comme des données d'image indépendamment de la présence de l'objet de détection dans la zone de détection.

9. Dispositif d'automatisation de bâtiment selon l'une quelconque des revendications 1 à 8,
**caractérisé en ce qu'**
une unité de segmentation (28) pour une pluralité d'images partielles de la zone de détection est associée à l'unité d'évaluation d'image, ladite unité de segmentation (28) complétant notamment les données d'image partielle par des données de géométrie d'une image partielle en question qui prennent en compte une position d'attachement et/ou d'alignement de l'unité de captage d'image.

10. Dispositif d'automatisation de bâtiment selon l'une quelconque des revendications 1 à 9,
**caractérisé en ce que**
l'unité d'évaluation d'image comprend des moyens de détection de volume d'objet et/ou de nombre d'objets et/ou des moyens de localisation d'objet, qui génèrent des données de volume d'objet, des données de nombre d'objets et/ou des données de localisation d'objet concernant l'objet de détection dans la zone de détection, en particulier un nombre de personnes et/ou un endroit de personnes dans la zone de détection, sur la base des premières et des deuxièmes données de probabilité de même que des données d'attribution d'une unité de segmentation pour une pluralité d'images partielles de la zone de détection supplémentairement au signal de détection de présence ou indépendamment de celui-ci.

11. Dispositif d'automatisation de bâtiment selon l'une quelconque des revendications 1 à 10,
**caractérisé en ce que**
des moyens (30) pour détecter l'heure du jour et/ou la luminosité ambiante sont associés à l'unité de captage d'image de telle manière que les données d'image partielle prédéterminées et stockées pour les premiers moyens de comparaison et/ou les données d'image stockée de l'image générée de la zone de détection et stockée au moment antérieur pour les deuxièmes moyens de comparaison dépendent d'un état d'éclairage correspondant à l'heure du jour détectée ou à la luminosité ambiante détectée.

12. Dispositif d'automatisation de bâtiment selon l'une quelconque des revendications 1 à 11, **caractérisé en ce que**
l'unité de captage d'image est réalisée de manière sensible à un spectre infrarouge et une source d'éclairage infrarouge (15) orientée vers la zone de détection est associée à un boîtier (12) du dispositif d'automatisation de bâtiment.

13. Dispositif d'automatisation de bâtiment selon l'une quelconque des revendications 1 à 12,
**caractérisé en ce que**
le dispositif d'automatisation de bâtiment est destiné à la commande d'éclairage avec une lampe (10) comme unité prévue pour le bâtiment.

14. Dispositif d'automatisation de bâtiment selon l'une quelconque des revendications 1 à 13,
**caractérisé en ce que**
le dispositif d'automatisation de bâtiment est destiné à la commande de climatisation et/ou de fenêtre avec un rideau déplaçable, un vantail et/ou un battant, un agrégat de climatisation, un agrégat de chauffage et/ou un ventilateur comme unité prévue pour le bâtiment.

15. Dispositif d'automatisation de bâtiment selon l'une quelconque des revendications 1 à 14,
**caractérisé en ce que**
le dispositif d'automatisation de bâtiment est destiné à la commande d'ascenseur avec un système de commande de cabine d'ascenseur, un système de commande de porte d'ascenseur et/ou un système d'arrêt d'urgence d'ascenseur comme unité prévue pour le bâtiment.
